# EUROPEAN PATENT APPLICATION

(11) **EP 3 570 365 A1**
(43) Date of publication of application: **20.11.2019**
(21) Application number: 17891951.0
(22) Date of filing: 24.10.2017
(51) Int. Cl.: H01M 10/6567, H01M 10/6556, H01M 2/10

(54) **BATTERY PACK HOUSING AND BATTERY PACK COMPRISING SAME**

(30) Priority: 12.01.2017 KR 20170005282
(71) Applicant: Samsung SDI Co., Ltd., Yongin-si, Gyeonggi-do 17084 (KR)
(72) Inventor: AHN, Jang Gun, Yongin-si Gyeonggi-do 17084 (KR); LEE, Kye Youn, Yongin-si Gyeonggi-do 17084 (KR)
(74) Representative: Shearman, James Ward
(86) International application number: PCT/KR2017/011767
(87) International publication number: WO 2018/131776

(57) **Abstract**

An embodiment of the present invention relates to a battery pack housing and a battery pack comprising same. The objective of the present invention is to provide a battery pack housing in which a cooling water passage is formed integrally, and a battery pack comprising same. To this end, disclosed is a battery pack housing comprising: a bottom plate having through-holes passing through the inside thereof along a direction parallel to the bottom plate surface; a first sidewall which is coupled to one edge of the bottom plate so as to contact one end of the through-holes, and which has, positioned therein, a first hollow passing through the inside of the bottom plate along the longitudinal direction thereof and a first communication hole connecting the first hollow with the through-holes of the bottom plate; a second sidewall which is coupled to an opposite edge of the bottom plate so as to contact the other end of the through-holes and which has, positioned therein, a second hollow passing through the inside along the longitudinal direction thereof and a second communication hole connecting the through-holes with the second hollow; and occluding members for occluding both ends of the first hollow of the first sidewall and the second hollow of the second sidewall, respectively, wherein the first sidewall or the second sidewall is provided with an inlet for injecting cooling water into the first hollow or the second hollow and an outlet for discharging the cooling water to the outside.

## Description

### [Technical Field]

Embodiments of the present invention relate to a battery pack housing and a battery pack comprising same.

### [Background Art]

In general, an electronic device, such as a laptop computer or an electric vehicle, uses a battery pack including a plurality of battery modules connected in series and/or in parallel to one another, as a portable power source. A separate pipe is integrally formed with a housing of the battery pack to provide a passage for cooling water for protecting the battery module from overheating.

The above information disclosed in this Background section is only for enhancement of understanding of the background of the described technology and therefore it may contain information that does not form the prior art that is already known in this country to a person of ordinary skill in the art.

### [Technical Problems to be Solved]

Embodiments of the present invention provide a battery pack housing and a battery pack comprising same.

### [Technical Solutions]

Embodiments of the present invention provide a battery pack housing comprising a bottom plate having through-holes passing through the inside thereof along a direction parallel to the bottom plate surface, a first sidewall which is coupled to one edge of the bottom plate so as to contact one end of each of the through-holes, and which has a first hollow positioned therein, the first hollow passing through the inside of the first sidewall along its longitudinal direction, and a first communication hole connecting the first hollow with the through-holes of the bottom plate, a second sidewall which is coupled to an opposite edge of the bottom plate so as to contact the other end of each of the through-holes and which has a second hollow positioned therein, the second hollow passing through the inside of the second sidewall along its longitudinal direction, and a second communication hole connecting the through-holes with the second hollow, and occluding members for occluding both ends of the first hollow of the first sidewall and the second hollow of the second sidewall, respectively, wherein the first sidewall or the second sidewall is provided with an inlet for injecting cooling water into the first hollow or the second hollow and an outlet for discharging the cooling water to the outside.

In addition, the through-holes of the bottom plate may include a plurality of through-holes, which are arranged to be parallel with each other.

In addition, the inlet and the outlet may be located in the first sidewall and may be arranged to be spaced apart from each other along the longitudinal direction of the first sidewall, and a division plate for spatially separating the inlet and the outlet from each other on the first hollow of the first sidewall may be installed such that the inlet and the outlet are connected to some of the plurality of through-holes, respectively.

In addition, the inlet may be located in the first sidewall, the outlet may be located in the second sidewall, a first division plate for spatially separating arbitrary two neighboring through-holes from each other on the first hollow of the first sidewall, and a second division plate for spatially separating another two neighboring through-holes from each other on the second hollow of the second sidewall, may be installed such that the inlet, the first division plate, the second division plate and the outlet are sequentially arranged in that order in view of a direction perpendicular to a direction in which the through-holes extend.

In addition, some of the plurality of through-holes of the bottom plate may have different areas or shapes of cross-sections perpendicular to the direction in which the through-holes extend, from those of some other through-holes.

In addition, at least one of the bottom plate, the first sidewall and the second sidewall may be provided by extrusion molding.

In addition, the battery pack housing may further include reinforcement bars positioned to extend between the first sidewall and the second sidewall.

In addition, the battery pack housing may further include a third sidewall coupled to the other edge of the bottom plate, which is not coupled to the first sidewall or the second sidewall of the bottom plate.

Embodiments of the present invention also provide a battery pack comprising a battery module, a bottom plate shaped of a plate, supporting a bottom portion of the battery module and having through-holes passing through the inside thereof along a direction parallel to the bottom plate surface, a first sidewall which is coupled to one edge of the bottom plate so as to contact one end of each of the through-holes, which supports side surfaces of the battery module, and which has a first hollow positioned therein, the first hollow passing through the inside of the first sidewall along its longitudinal direction, and a first communication hole connecting the first hollow with the through-holes of the bottom plate, a second sidewall which is coupled to an opposite edge of the bottom plate so as to contact the other end of each of the through-holes, which supports side surfaces of the battery module, and which has a second hollow positioned therein, the second hollow passing through the inside of the second sidewall along its longitudinal direction, and a second communication hole connecting the through-holes with the second hollow, and occluding members for occluding both ends of the first hollow of the first sidewall and the second hollow of the second sidewall, respectively, wherein the first sidewall or the second sidewall is provided with an inlet for injecting cooling water into the first hollow or the second hollow and an outlet for discharging the cooling water to the outside.

In addition, the through-holes of the bottom plate may include a plurality of through-holes, which are arranged to be parallel with each other.

In addition, the inlet and the outlet may be located in the first sidewall and may be arranged to be spaced apart from each other along the longitudinal direction of the first sidewall, and a division plate for spatially separating the inlet and the outlet from each other on the first hollow of the first sidewall may be installed such that the inlet and the outlet are connected to some of the plurality of through-holes, respectively.

In addition, the inlet may be located in the first sidewall, the outlet may be located in the second sidewall, and a first division plate for spatially separating arbitrary two neighboring through-holes from each other on the first hollow of the first sidewall, and a second division plate for spatially separating another two neighboring through-holes from each other on the second hollow of the second sidewall, may be installed such that the inlet, the first division plate, the second division plate and the outlet are sequentially arranged in that order in view of a direction perpendicular to a direction in which the through-holes extend.

In addition, some of the plurality of through-holes of the bottom plate may have different areas or shapes of cross-sections perpendicular to the direction in which the through-holes extend, from those of some other through-holes.

In addition, at least one of the bottom plate, the first sidewall and the second sidewall may be provided by extrusion molding.

In addition, the battery pack may further include reinforcement bars positioned to extend between the first sidewall and the second sidewall.

In addition, the battery pack may further include a third sidewall coupled to the other edge of the bottom plate, which is not coupled to the first sidewall or the second sidewall of the bottom plate, and supporting the side surfaces of the battery module in cooperation with the first sidewall or the second sidewall.

### [Advantageous Effects]

As described above, in embodiments of the present invention, since various components of the battery pack housing are provided by extrusion molding, a cooling water passage is integrally formed with the battery pack housing, thereby allowing the battery pack housing to have a simplified configuration and to be easily manufactured.

In addition, a variety of passage forms can be implemented by installing a division plate on the cooling water passage.

In addition, the battery pack housing is configured such that the cooling water passage has different cross-sections, thereby obtaining a uniform cooling effect throughout the passage.

### [Brief Description of Drawings]

FIG. 1 is a perspective view of a battery pack according to an embodiment of the present invention.
FIG. 2 is a perspective view of a battery pack housing according to an embodiment of the present invention.
FIG. 3 is a perspective view of a bottom plate of the battery pack housing according to an embodiment of the present invention.
FIGS. 4 and 5 are perspective views of a first sidewall of the battery pack housing according to an embodiment of the present invention.
FIG. 6 is a partially cross-sectional view of a plane A in FIG. 2.
FIG. 7 is a cross-sectional view taken along the line B-B in FIG. 2.
FIGS. 8 and 9 illustrate examples of modified forms of cooling water passages.
FIG. 10 is a cross-sectional view of a bottom plate of the battery pack housing according to another embodiment of the present invention.

### [Best Mode for Carrying Out the Invention]

Hereinafter, a preferred embodiment of the present invention will be described in detail.

Various embodiments of the present invention may be embodied in many different forms and should not be construed as being limited to the exemplary embodiments set forth herein. Rather, these exemplary embodiments of the disclosure are provided so that this disclosure will be thorough and complete and will convey inventive concepts of the disclosure to those skilled in the art.

In the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present and the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "below," "beneath," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "on" or "above" the other elements or features. Thus, the exemplary term "below" can encompass both an orientation of above and below.

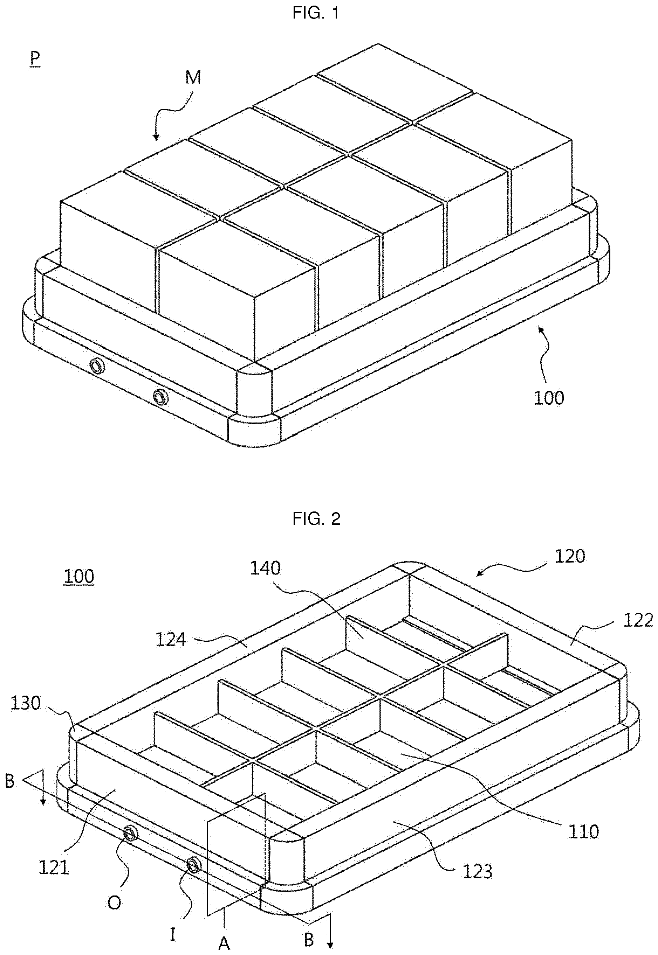

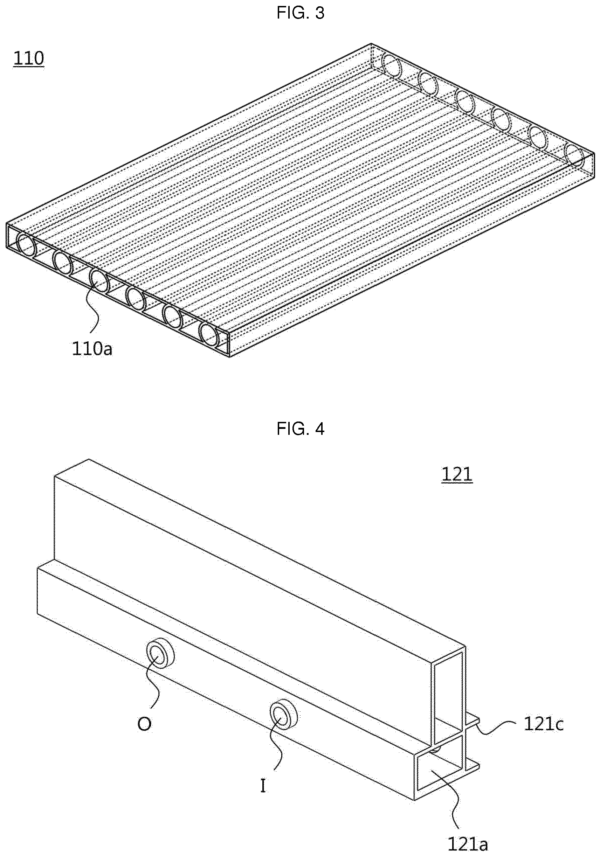

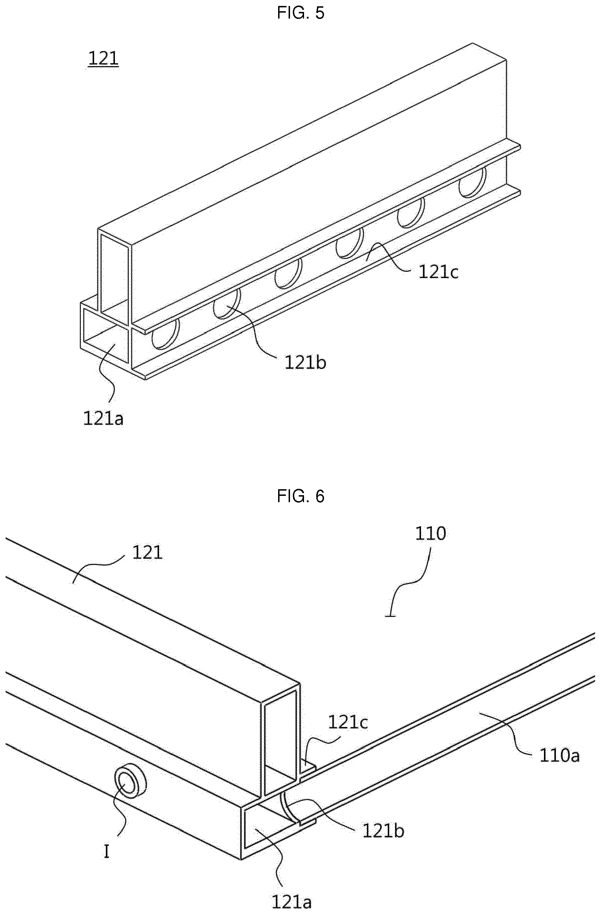

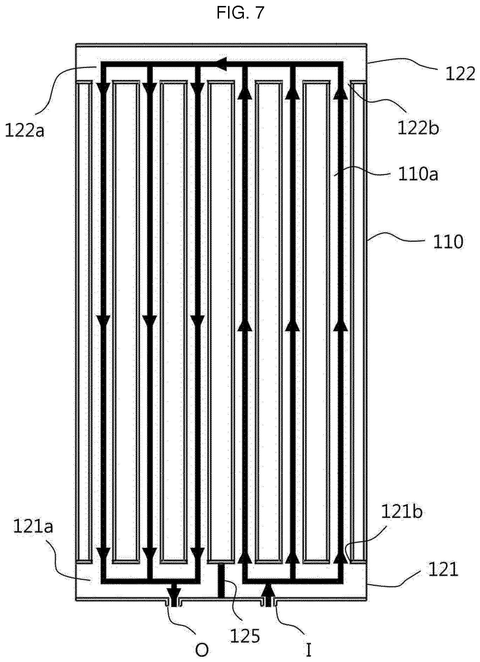

FIG. 1 is a perspective view of a battery pack P according to an embodiment of the present invention, in which a shape of a battery module M is schematically illustrated. FIG. 2 is a perspective view of a battery pack housing 100 according to an embodiment of the present invention. FIG. 3 is a perspective view of a bottom plate 110 of the battery pack housing 100 according to an embodiment of the present invention. FIGS. 4 and 5 are perspective views of a first sidewall 121 of the battery pack housing 100 according to an embodiment of the present invention, in which the first sidewall 121 is viewed in different directions. FIG. 6 is a partially cross-sectional view of a plane A in FIG. 2. FIG. 7 is a cross-sectional view taken along the line B-B in FIG. 2, in which only the bottom plate 110, the first sidewall 121, a second sidewall 122 and a division plate 125 are illustrated.

However, dimensions or proportions of various components shown in the drawings may be exaggerated for clarity of illustration, and it will be apparent to one skilled in the art that they can be modified to appropriate dimensions or proportions according to individual embodiment conditions.

Referring first to FIGS. 1 and 2, the battery module M is installed on the battery pack housing 100, and the battery pack housing 100 includes a bottom plate 110, sidewalls 120, an occluding member 130 and reinforcement bars 140.

More specifically, referring to FIG. 3, the bottom plate 110 is substantially shaped of a plate and supports a bottom portion of the battery module M. Considering a general mode in which the battery module M is positioned on the bottom plate 110 or general spatial utilization efficiency of the battery pack P, it is desirable for the bottom plate 110 to have a substantially rectangular shape. However, when necessary, the bottom plate 110 may be shaped of a circle or other polygons. In the following description, the bottom plate 110 will be described by way of example with regard to a case where the bottom plate 110 is shaped of a rectangle, as shown in FIG. 3.

Through-holes 110a are provided in the bottom plate 110, the through-holes 110a passing through the inside of the bottom plate 110 along a direction parallel to a bottom plate surface from one edge to an opposite edge of the bottom plate 110. The through-holes 110a include a plurality of through-holes, which are arranged to be parallel with each other. The through-holes 110a may function as passages for cooling water, which will later be described, and may reduce the overall weight of the bottom plate 110 by removing unnecessary parts from the bottom plate 110.

Specifically, in order for the bottom plate 110 to have the above-described structure, the bottom plate 110 may be provided by extrusion molding. In this case, the through-holes 110a will be produced at places where a mandrel passes during extrusion molding in a direction in which the bottom plate 110 is extruded.

Accordingly, the through-holes 110a are naturally produced in the bottom plate 110 by the mandrel during extrusion molding without separately fabricating holes in the bottom plate 110, thereby reducing the production time and expenses. In addition, objects that are extruded longways may be cut as long as necessary, thereby easily adjusting the length of the bottom plate 110. Moreover, the cut objects may be additionally added in a direction perpendicular to the direction in which the bottom plate 110 is extruded, thereby obtaining the bottom plate 110 having various widths.

The sidewalls 120 are coupled to edges of the bottom plate 110 to support side surfaces of the battery module M. If the bottom plate 110 is shaped of a rectangle, as described above, the sidewalls 120 include four sidewalls in total so as to be coupled to edges of the rectangle, respectively. In the following description, for brevity, the respective sidewalls 120 will be referred to as a first sidewall 121, a second sidewall 122, a third sidewall 123 and a fourth sidewall 124.

More specifically, referring to FIGS. 4 to 6, a first hollow 121a passing through the inside of the bottom plate 110 along the longitudinal direction of the first sidewall 121 is provided in the first sidewall 121. The first hollow 121a may also function as a passage for cooling water, which will later be described, and may remove unnecessary parts of the bottom plate 110, thereby reducing the overall weight of the bottom plate 110. Furthermore, as a result of providing the first hollow 121a, the first sidewall 121 may have a double-walled structure, by which an inner wall of the first sidewall 121 can be prevented from being deformed to some extent when an outer wall thereof is deformed due to external impacts, thereby effectively protecting the battery module M.

In order for the first sidewall 121 to have the above-described structure, the first sidewall 121 may also be provided by extrusion molding. In this case, the through-holes 110a will be produced at places where the mandrel passes during extrusion molding along a direction in which the first sidewall 121 is extruded.

The first sidewall 121 is coupled to one edge of the bottom plate 110 so as to contact one end of each of the through-holes 110a of the bottom plate 110. Here, a first communication hole 121b connecting the through-holes 110a with the first hollow 121a are located in the first sidewall 121. In a case where the through-holes 110a include a plurality of through-holes, the first communication hole 121b may also include a plurality of first communication holes, which are located at places where the plurality of through-holes 110a are located or only at places where some of the plurality of through-holes 110a are located. In the former case, all of the through-holes 110a are connected with the first hollow 121a to function as passages for cooling water. However, in the latter case, only some of the through-holes 110a may function as passages for cooling water by being connected with the first hollow 121a, and the other through-holes 110a may just serve to reduce the overall weight of the bottom plate 110 by being each occluded at one end by the first sidewall 121.

In addition, a coupling guide 121c for improving assembling performance may be provided in the first sidewall 121 by defining a place where the bottom plate 110 is coupled to the first sidewall 121.

Like the first sidewall 121, the second sidewall 122 may also be provided by extrusion molding, so that it has a second hollow 122a positioned therein, the second hollow 122a passing through the inside along the longitudinal direction thereof. In addition, the second sidewall 122 is coupled to an opposite edge of the bottom plate 110 so as to contact the other end of each of the through-holes 110a and has a second communication hole 122b positioned therein, the second communication hole 122b connecting the through-holes 110a with the second hollow 122a. Since the other matters are substantially the same as described above with regard to the first sidewall 121, redundant descriptions will not be given.

Meanwhile, both ends of each of the first hollow 121a of the first sidewall 121 and the second hollow 122a of the second sidewall 122 are occluded, respectively, which may be achieved by separately coupling the occluding member 130, as shown in FIG. 2, or by welding the both ends of the first hollow 121a and the second hollow 122a. Alternatively, the occluding may be achieved by coupling the third sidewall 123 or the fourth sidewall 124 to the first hollow 121a and the second hollow 122a so as to occlude the both ends of the first hollow 121a and the second hollow 122a, respectively. That is to say, the first sidewall 121 and the second sidewall 122 may be arranged between and coupled to the third sidewall 123 and the fourth sidewall 124 such that the both ends of the first hollow 121a and the second hollow 122a contacts the third sidewall 123 and the fourth sidewall 124, respectively. In this case, the third sidewall 123 and the fourth sidewall 124 will serve as an alternative to the occluding member 130.

In addition, the first sidewall 121 or the second sidewall 122 is provided with an inlet I for injecting cooling water into the first hollow 121a or the second hollow 122a and an outlet O for discharging the cooling water to the outside.

FIG. 7 illustrates a case in which both of the inlet I and the outlet O are located in the first sidewall 121. Referring to FIG. 7, the inlet I and the outlet O are arranged to be spaced apart from each other along the longitudinal direction of the first sidewall 121. Here, the division plate 125 for spatially separating the inlet I and the outlet O from each other on the first hollow 121a of the first sidewall 121 may be installed on the first hollow 121a of the first sidewall 121. However, the division plate 125 is to be positioned such that the inlet I and the outlet O are connected to some of the plurality of through-holes 110a, respectively, so as to discharge the cooling water through the outlet O after being injected through the inlet I and circulating along the first hollow 121a, the through-holes 110a and the second hollow 122a.

In this case, the cooling water may flow from an inlet-side region of two regions of the first hollow 121a divided by the division plate 125 to the second hollow 122a along some of the through-holes 110a connected to the inlet I, and then flow to an outlet side region of the two regions of the first hollow 121a along the rest through-holes 110a to then be finally discharged through the outlet O.

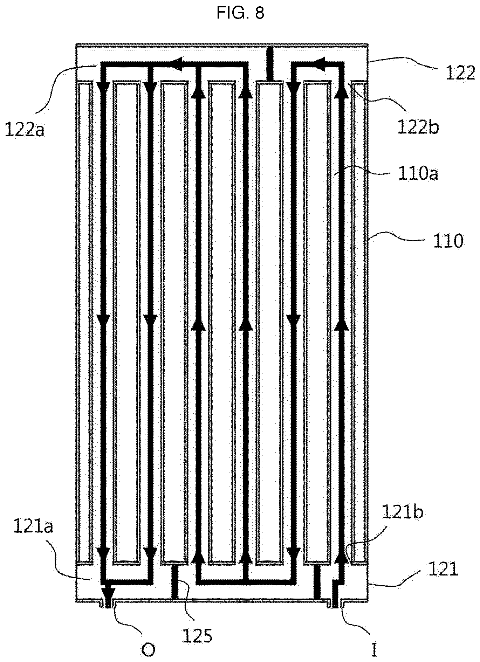

Here, flow patterns of the cooling water may be easily modified, as illustrated in FIG. 8, by changing only the number and position of the division plate 125. As shown in FIG. 8, two division plates 125 are installed on the first hollow 121a and one division plate 125 is installed on the second hollow 122a, such that the division plate 125 of the second hollow 122a is positioned between the two division plates 125 of the second hollow 122a in view of a direction perpendicular to a direction in which the through-holes 110a extend. While the cooling water passage illustrated in FIG. 7 is implemented in a substantially U-shaped form, the cooling water passage illustrated in FIG. 8 may be implemented in a substantially M-shaped form.

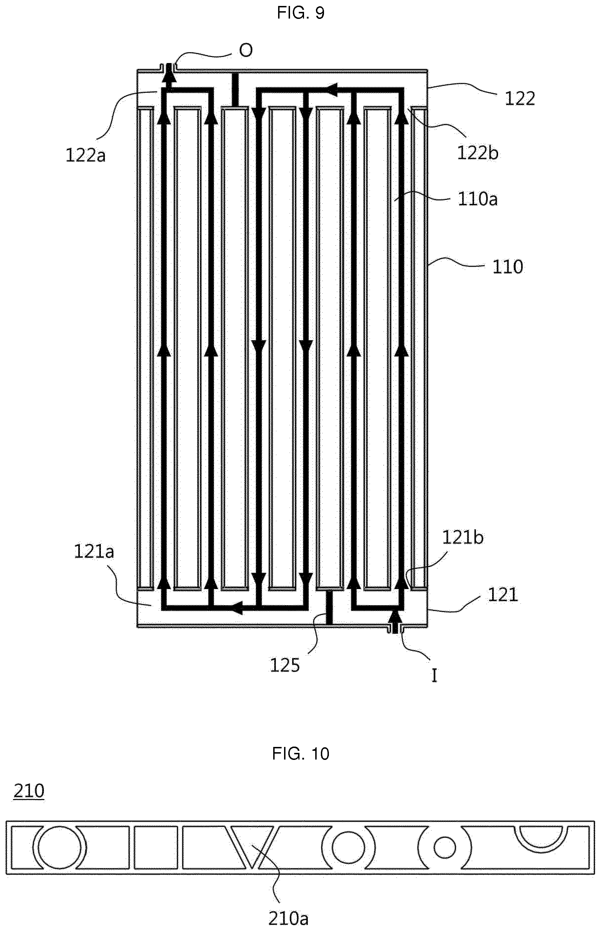

Of course, as illustrated in FIG. 9, the inlet I may be located in the first sidewall 121 and the outlet O may be located in the second sidewall 122, so that the division plates 125 are installed on the first hollow 121a and the second hollow 122a, respectively. In this case, in view of the direction perpendicular to the direction in which the through-holes 110a extend, the inlet I, the division plate 125 installed on the first hollow 121a, the division plate 125 in stalled on the second hollow 122a and the outlet O are sequentially arranged in that order. However, the division plate 125 installed on the first hollow 121a is to be positioned between arbitrary two neighboring through-holes 110a, and the division plate 125 installed on the second hollow 122a is to be positioned between another two neighboring through-holes 110a, so as to discharge the cooling water through the outlet O after being injected through the inlet I and circulating along the first hollow 121a, the through-holes 110a and the second hollow 122a. Then, the cooling water passage illustrated in FIG. 7 is implemented in a substantially N-shaped form, as indicated by arrows in FIG. 9.

Additionally, the flow patterns of the cooling water may be defined in various manners by further changing only the numbers and positions of the division plates 125, and no more illustration will be given.

Referring back to FIG. 2, the third sidewall 123 and the fourth sidewall 124 are coupled to the other edges of the bottom plate 110, which are not coupled to the first sidewall 121 and the second sidewall 122, respectively. The third sidewall 123 and the fourth sidewall 124 are also provided by extrusion molding, so that they have a double-walled structure, thereby effectively protecting the battery module M, as described above.

More specifically, the first sidewall 121, the second sidewall 122, the third sidewall 123 and the fourth sidewall 124 may be provided by cutting an object that is extruded longways by a predetermined length. That is to say, only the first communication hole 121b and the second communication hole 122b are processed in the cut objects to be used as the first sidewall 121 and the second sidewall 122, respectively. In addition, if no other holes are provided, the first communication hole 121b and the second communication hole 122b processed in the cut objects may be used as the third sidewall 123 and the fourth sidewall 124, respectively.

Meanwhile, the reinforcement bars 140 are positioned to extend between the sidewalls 120, thereby reinforcing structural strengths of the sidewalls 120. Although FIG. 2 illustrates that the reinforcement bars 140 are positioned to extend between the first sidewall 121 and the second sidewall 122 and between the third sidewall 123 and the fourth sidewall 124, the reinforcement bars 140 may be positioned to extend between the first sidewall 121 and the third sidewall 123 according to modes in which the battery module M is positioned.

FIG. 10 is a cross-sectional view of a bottom plate 210 of the battery pack housing according to another embodiment of the present invention.

Referring to FIG. 10, a plurality of through-holes 210a of the bottom plate 210 may have different areas or shapes from one another. In general, temperatures of cooling water may increase toward a downstream side by heat transferred from a battery module M. Therefore, the through-holes 210a may be configured to exchange the heat over a wider area toward the downstream side, thereby more uniformly cooling the battery module M.

In a case where the bottom plate 210 is fabricated by extrusion molding, areas or shapes of the through-holes 210a may be easily modified by employing mandrels having different areas or shapes.

Since the other components are the same with those of the battery pack housing 100 according to an embodiment of the present invention, additional descriptions will not be given.

Although the foregoing embodiments have been described to practice the battery pack housing of the present invention, these embodiments are set forth for illustrative purposes and do not serve to limit the invention. Those skilled in the art will readily appreciate that many modifications and variations can be made, without departing from the spirit and scope of the invention as defined in the appended claims, and such modifications and variations are encompassed within the scope and spirit of the present invention.

## Claims

1. A battery pack housing comprising:
a bottom plate having through-holes passing through the inside thereof along a direction parallel to the bottom plate surface;
a first sidewall which is coupled to one edge of the bottom plate so as to contact one end of each of the through-holes, and which has a first hollow positioned therein, the first hollow passing through the inside of the first sidewall along its longitudinal direction, and a first communication hole connecting the first hollow with the through-holes of the bottom plate;
a second sidewall which is coupled to an opposite edge of the bottom plate so as to contact the other end of each of the through-holes and which has a second hollow positioned therein, the second hollow passing through the inside of the second sidewall along its longitudinal direction, and a second communication hole connecting the through-holes with the second hollow; and
occluding members for occluding both ends of the first hollow of the first sidewall and the second hollow of the second sidewall, respectively,
wherein the first sidewall or the second sidewall is provided with an inlet for injecting cooling water into the first hollow or the second hollow and an outlet for discharging the cooling water to the outside.

2. The battery pack housing of claim 1, wherein the through-holes of the bottom plate include a plurality of through-holes, which are arranged to be parallel with each other.

3. The battery pack housing of claim 2, wherein the inlet and the outlet are located in the first sidewall and are arranged to be spaced apart from each other along the longitudinal direction of the first sidewall, and a division plate for spatially separating the inlet and the outlet from each other on the first hollow of the first sidewall is installed such that the inlet and the outlet are connected to some of the plurality of through-holes, respectively.

4. The battery pack housing of claim 2, wherein the inlet is located in the first sidewall, the outlet is located in the second sidewall, a first division plate for spatially separating arbitrary two neighboring through-holes from each other on the first hollow of the first sidewall, and a second division plate for spatially separating another two neighboring through-holes from each other on the second hollow of the second sidewall, are installed such that the inlet, the first division plate, the second division plate and the outlet are sequentially arranged in that order in view of a direction perpendicular to a direction in which the through-holes extend.

5. The battery pack housing of claim 2, wherein some of the plurality of through-holes of the bottom plate have different areas or shapes of cross-sections perpendicular to the direction in which the through-holes extend, from those of some other through-holes.

6. The battery pack housing of claim 1, wherein at least one of the bottom plate, the first sidewall and the second sidewall is provided by extrusion molding.

7. The battery pack housing of claim 1, further comprising reinforcement bars positioned to extend between the first sidewall and the second sidewall.

8. The battery pack housing of claim 1, further comprising a third sidewall coupled to the other edge of the bottom plate, which is not coupled to the first sidewall or the second sidewall of the bottom plate.

9. A battery pack comprising:
a battery module;
a bottom plate shaped of a plate, supporting a bottom portion of the battery module and having through-holes passing through the inside thereof along a direction parallel to the bottom plate surface;
a first sidewall which is coupled to one edge of the bottom plate so as to contact one end of each of the through-holes, which supports side surfaces of the battery module, and which has a first hollow positioned therein, the first hollow passing through the inside along the longitudinal direction thereof, and a first communication hole connecting the first hollow with the through-holes of the bottom plate;
a second sidewall which is coupled to an opposite edge of the bottom plate so as to contact the other end of each of the through-holes, which supports side surfaces of the battery module, and which has a second hollow positioned therein, the second hollow passing through the inside along the longitudinal direction thereof, and a second communication hole connecting the through-holes with the second hollow; and
occluding members for occluding both ends of the first hollow of the first sidewall and the second hollow of the second sidewall, respectively,
wherein the first sidewall or the second sidewall is provided with an inlet for injecting cooling water into the first hollow or the second hollow and an outlet for discharging the cooling water to the outside.

10. The battery pack of claim 9, wherein the through-holes of the bottom plate include a plurality of through-holes, which are arranged to be parallel with each other.

11. The battery pack of claim 10, wherein the inlet and the outlet are located in the first sidewall and are arranged to be spaced apart from each other along the longitudinal direction of the first sidewall, and a division plate for spatially separating the inlet and the outlet from each other on the first hollow of the first sidewall is installed such that the inlet and the outlet are connected to some of the plurality of through-holes, respectively.

12. The battery pack of claim 10, wherein the inlet is located in the first sidewall, the outlet is located in the second sidewall, and a first division plate for spatially separating arbitrary two neighboring through-holes from each other on the first hollow of the first sidewall, and a second division plate for spatially separating another two neighboring through-holes from each other on the second hollow of the second sidewall, are installed such that the inlet, the first division plate, the second division plate and the outlet are sequentially arranged in that order on the basis of a direction perpendicular to a direction in which the through-holes extend.

13. The battery pack of claim 9, wherein some of the plurality of through-holes of the bottom plate have different areas or shapes of cross-sections perpendicular to the direction in which the through-holes extend, from those of some other through-holes.

14. The battery pack of claim 9, wherein at least one of the bottom plate, the first sidewall and the second sidewall is provided by extrusion molding.

15. The battery pack of claim 9, further comprising reinforcement bars positioned to extend between the first sidewall and the second sidewall.

16. The battery pack of claim 9, further comprising a third sidewall coupled to the other edge of the bottom plate, which is not coupled to the first sidewall or the second sidewall of the bottom plate, and supporting the side surfaces of the battery module in cooperation with the first sidewall or the second sidewall.
